# EUROPÄISCHE PATENTANMELDUNG

(11) **EP 4 742 129 A1**
(43) Veröffentlichungstag der Anmeldung: **13.05.2026**
(21) Anmeldenummer: 25213718.7
(22) Anmeldetag: 05.11.2025
(51) Int. Cl.: G06Q 10/20, G06Q 30/018

(54) **VERFAHREN ZUR KALIBRIERUNG UND/ODER ADJUSTIERUNG VON SENSOREN DER PROZESSTECHNIK**

(30) Priorität: 06.11.2024 DE 102024132272
(71) Anmelder: ifm electronic gmbh, 45128 Essen (DE)
(72) Erfinder: Schneider, Christian, 88364 Wolfegg (DE)
(74) Vertreter: Ifm Patentabteilung

(57) **Zusammenfassung**

Die Erfindung betrifft ein Verfahren zur Kalibrierung und/oder Adjustierung von Sensoren der Prozesstechnik umfassend die Schritte: Bestellung einer Kalibrierung durch den Kunden unter Angabe der Seriennummer des Sensors, Übermittlung einer digitalen Kalibriererlaubnis und gegebenenfalls von Kalibriernormalen an den Kunden, Durchführung und Dokumentation der Messungen durch den Kunden, vorzugsweise unterstützt durch eine App oder eine Anleitung, Übertragung der Messwerte und weiterer notwendiger Daten an den Hersteller, Prüfung der Daten durch den Hersteller und Ausstellung eines Kalibrierzertifikats, das zumindest digital, vorzugsweise aber auch als physische Kopie verfügbar ist, Kryptographische Verkettung der Kalibrierzertifikate.

## Beschreibung

Die Erfindung betrifft ein Verfahren zur Kalibrierung und/oder Adjustierung von Sensoren der Prozesstechnik, das es ermöglicht, diese Aufgaben vor Ort durch den Betreiber selbst durchzuführen.

Herkömmliche Methoden sehen vor, dass die Sensoren entweder in ein Kalibrierlabor eingeschickt werden müssen oder eine Person des Herstellers vor Ort die Kalibrierung durchführt. Beides Methoden sind aufwändig und teuer und können möglicherweise einen Maschinenstillstand notwendig machen.

Aus dem Dokument WO 2023/117341 A1 ist ein sicheres Verfahren zur Selbst-(Nach-)Eichung oder Selbstkalibrierung von Geräten bekannt, insbesondere Messgeräten, durch den Betreiber, wobei ein digitalisierter Prozessablauf in einer Datenkette (DLT), insbesondere Blockchain, die unter Anwendung einer Distributed-Ledger-Technologie erstellt und gesichert ist, zum Einsatz kommt.

Das Dokument CN102291278A beschreibt ein System und ein Verfahren zur Fernprüfung, Kalibrierung und Wartung von Sensoren oder Geräten. Das System umfasst Sensoren oder Geräte, Standardgeräte, Datenerfassungsmodule, Datenschreibmodule, Clients und eine Remote-Service-Plattform. Das System zielt darauf ab, Fernprüfungs- und Kalibrierungsdienste für Sensoren oder Geräte sowie regelmäßige Wartungsdienste für Sensor- oder Geräteprodukte anzubieten.

Das Dokument WO2014/198564A1 beschreibt ein Verfahren zur Kalibrierung eines Sensors, umfassend: Bestimmen einer Position des Sensors; Bereitstellen von Sensordaten, umfassend Identifikationsdaten und die Position des Sensors an einen Kalibrierungsdatenanbieter; Beziehen von Kalibrierungsdaten vom Kalibrierungsdatenanbieter; und Kalibrieren des Sensors gemäß den Kalibrierungsdaten.

Das Dokument WO2016/094946A1 beschreibt ein Verfahren, ein System, einen Server und ein Computerprogrammprodukt zur Kalibrierung eines Sensors eines Gebäudes. Insbesondere kann das Verfahren Folgendes umfassen: Empfangen von Sensoridentifikationsdaten am Computersystem, wobei die Identifikationsdaten durch die Kommunikation einer Kennung bereitgestellt werden, die dem Sensor und einem Identifikationsgerät zugeordnet ist, das zur Kommunikation mit dem System konfiguriert ist; Empfangen von Messdaten am Computersystem, die ein mit einem Kalibrierungssensorgerät gemessenes physikalisches Phänomen darstellen, das durch Kommunikation eines tragbaren Kalibrierungssensorgeräts mit einer Umgebung in der Nähe des Sensors bereitgestellt wird, wobei das tragbare Kalibrierungssensorgerät zur Kommunikation mit dem System konfiguriert ist; und Empfangen von Sensordaten am Computersystem, die mit den Identifikationsdaten des Sensors verknüpft sind, wobei die Sensordaten ein von dem Sensor bereitgestelltes, mit dem Sensor gemessenes physikalisches Phänomen darstellen; Berechnen eines Differenzwerts im Computersystem zwischen den Messdaten und den Sensordaten, um Kalibrierungsdaten bereitzustellen.

Aufgabe der Erfindung ist es, die Kalibrierung und/oder Adjustierung von Sensoren der Prozesstechnik zu vereinfachen und dabei eine zuverlässige Nachweisbarkeit zu gewährleisten.

Die Aufgabe wird erfindungsgemäß durch ein Verfahren mit den Merkmalen des Anspruchs 1 gelöst. Vorteilhafte Ausgestaltungen der Erfindung sind in den Unteransprüchen angegeben.

Die Erfindung wird nachfolgend anhand der beigefügten Zeichnungen näher erläutert. Es zeigen:
- Figur 1: ein schematisches Flussdiagramm des Prozessablaufs zur Kalibrieranfrage und -freigabe;
- Figur 2: ein schematisches Flussdiagramm des Prozessablaufs zur Kalibrierungsmessung und Zertifikatserstellung.

Das erfindungsgemäße Verfahren beginnt mit der Bestellung einer Kalibrierung durch den Anwender 105 unter Angabe der Seriennummer 111 des zu kalibrierenden Sensors oder Feldgeräts 100. Dies kann über eine Benutzeroberfläche 200, beispielsweise eine App auf einem mobilen Gerät oder eine Webseite, erfolgen.

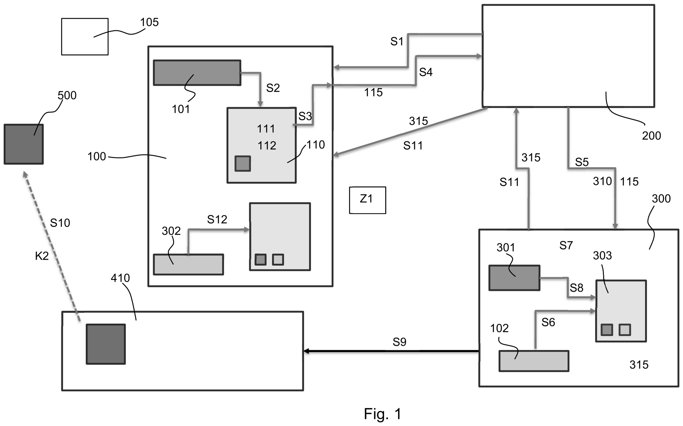

Prozess der Kalibrieranfrage und -freigabe (siehe Fig. 1):
Zuerst führt der Anwender 105 eine Funktion zur "Kalibrierung anfordern" auf dem Feldgerät 100 aus , S1. Das Feldgerät 100 erstellt daraufhin einen Kalibrierantrag 110, der die Seriennummer 111 des Geräts 100 und eine eindeutige Geräte-ID UUID 112 enthält S2. Dieser Kalibrierantrag 110 wird vom Feldgerät 100 mittels seines Geräte-Privatschlüssels 101 signiert, S3, wodurch ein signierter Kalibrierantrag 115 entsteht.

Der Anwender 105 liest den signierten Kalibrierantrag 115 über die Benutzeroberfläche 200 vom Feldgerät 100 aus, S4, und übermittelt diesen zusammen mit einer Bestellung 310 für den digitalen Service an das Shop-Backend-System des Herstellers 300, S5.

Das Shop-Backend-System des Herstellers 300 prüft die Legitimität des signierten Kalibrierantrags 115, indem es die Signatur mit dem Geräte-Öffentlichen Schlüssel 102 des Geräts 100 verifiziert, S6. Dieser Geräte-Öffentliche Schlüssel 102 wurde bei der Produktion des Feldgeräts 100 in einer Datenbank 303 des Shop-Backend-Systems 300 gespeichert. Zudem überprüft das Shop-Backend-System 300 die Bezahlung der Bestellung, S7.

Nach erfolgreicher Prüfung signiert das Shop-Backend-System des Herstellers 300 den Kalibrierantrag 110 mit einem eigenen Shop-Privatschlüssel 301, S8. Dies erzeugt eine digitale Kalibriererlaubnis in Form eines signierten Kalibrierantrags 315. Damit ist die Berechtigung zur Ausführung der Kalibrierfunktion erteilt. Da der Kalibrierantrag 110 über den Geräte-Privatschlüssel 101 des Geräts 100 fest an dieses gebunden ist, kann er auch nur mit diesem verwendet und nicht auf beliebig vielen anderen Geräten eingesetzt werden.

Bei Bedarf, wenn das Kalibriernormal 500 nicht bereits im Kundenbesitz ist oder kein integraler Bestandteil des Sensors 100 ist, fordert das Shop-Backend-System des Herstellers 300 Kalibriernormale 500 vom Lager- und Versandsystem des Herstellers 410 an, S9. Das Lager- und Versandsystem des Herstellers 410 versendet diese Kalibriernormale 500 physisch K2 an den Anwender 105, S10.

Der vom Shop-Backend-System des Herstellers 300 signierte Kalibrierantrag 315 digitale Kalibriererlaubnis wird an das Feldgerät 100 übermittelt, S11 und in das Gerät 100 geschrieben. Das Feldgerät 100 prüft die Signatur des signierten Kalibrierantrags 315 mit dem Shop-Öffentlichen Schlüssel 302 des Shop-Backend-Systems 300, der in der Gerätesoftware hinterlegt ist, S12. Bei erfolgreicher Prüfung geht das Gerät 100 in den Zustand "Bereit für Kalibration" Z1.

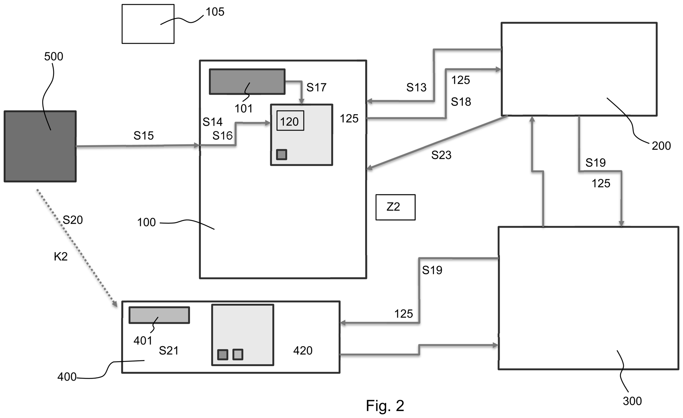

Prozess der Kalibrierungsmessung und Zertifikatserstellung (siehe Fig. 2):
Der Anwender 105 führt auf dem Feldgerät 100 die Funktion "Kalibrierung starten" aus, S13, typischerweise über die Benutzeroberfläche 200. Das Feldgerät 100 prüft zunächst, ob sein Gerätezustand Z1 dafür geeignet ist, S14. Manche Geräte müssen dafür in einem bestimmten Temperaturbereich sein oder schon eine bestimmte Zeit gelaufen sein.

Das Feldgerät 100 führt die Messung, S15 mit dem Kalibriernormal 500 durch. Die während der Kalibrierung ermittelten Messwerte 121 werden in ein digitales Messprotokoll 120 verpackt, S16. Dieses digitale Messprotokoll 120 wird vom Feldgerät 100 mit seinem Geräte-Privatschlüssel 101 signiert, S17, wodurch ein signiertes Messprotokoll 125 entsteht. Der Anwender 105 kann die vorläufigen Kalibrierungsergebnisse 125 über die Benutzeroberfläche 200 auslesen, S18.

Das signierte Messprotokoll 125 wird über die Benutzeroberfläche 200 und das Shop-Backend-System des Herstellers 300 an das Kalibrierlabor des Herstellers 400 weitergeleitet, S19. Im Kalibrierlabor 400 wird das Messprotokoll 125 bewertet automatisiert oder manuell. Falls physische Kalibriernormale 500 verwendet wurden, können diese vom Anwender 105 an das Kalibrierlabor 400 zurückgesendet werden, S20, K2, um sicherzustellen, dass sie vor der Signatur des Zertifikats wieder eingetroffen sind.

Das Kalibrierlabor 400 signiert das digitale Messprotokoll 125 mit dessen Labor-Privatschlüssel 401, S21, wenn die Kalibrierung erfolgreich ist. Dadurch wird das signierte Messprotokoll 125 zu einem digitalen Kalibrierzertifikat 420. Dieses digitale Kalibrierzertifikat 420 wird anschließend über das Shop-Backend-System des Herstellers 300 und die Benutzeroberfläche 200 zurück an das Feldgerät 100 übermittelt, S22, und dort gespeichert, S23. Das Feldgerät 100 geht daraufhin wieder in den Zustand "kalibriert" Z2.

Vorteile und weitere Aspekte:
Ein wesentlicher Aspekt der Erfindung ist die kryptographische Verkettung aller bisher erfolgten Kalibrierzertifikate 420. Dies ermöglicht es, bei Audits sehr einfach und lückenlos nachzuweisen, dass der Pflicht zur regelmäßigen Kalibrierung nachgekommen wurde. Die digitalen Kalibrierzertifikate 420 werden dabei ähnlich wie bei einer Technischen Sicherheitseinrichtung TSE beim Kassenbon kryptographisch verkettet. Dies gewährleistet eine hohe Integrität und Authentizität der gesamten Kalibrierhistorie des Geräts 100.

Die Übertragung der digitalen Kalibriererlaubnis 315 und der Kalibrierzertifikate 420 kann mittels einer beliebigen digitalen Kommunikation erfolgen, was dem Verfahren zusätzliche Flexibilität verleiht. Beispiele hierfür sind direkte digitale Kommunikation über eine Schnittstelle oder das Scannen eines auf dem Display angezeigten QR-Codes.

Falls eine Adjustierung des Sensors 100 erforderlich ist, können die dafür benötigten Adjustierungsdaten 421 ebenfalls zusammen mit dem digitalen Kalibrierzertifikat 420 geliefert und in den Sensor 100 geladen werden.

Während der Kalibrierung können neben den ermittelten Messwerten 121 auch lokale Umgebungsdaten vom Ort der Kalibrierung z.B. Umgebungstemperatur, Luftfeuchtigkeit und gegebenenfalls Fotos an das Shop-Backend-System des Herstellers 300 übermittelt werden.

Das digitale Kalibrierzertifikat 420, das nun im Gerät 100 gespeichert ist, muss nicht zwingend ausgedruckt und abgeheftet werden. Es kann jederzeit aus dem Gerät 100 ausgelesen und mit Hilfe eines geeigneten Bedientools auch in einer ausdruckbaren Form angezeigt werden. Das Kalibrierzertifikat 420 ist somit sowohl als physische Kopie 425 als auch digital verfügbar.

Mit modernen, digitalen Bezahlungsmethoden und der beschriebenen digitalen Signatur- und Prüfprozesse kann der gesamte Vorgang der Kalibrieranfrage und - freigabe sehr schnell, oft innerhalb von Sekunden, abgewickelt werden, was den traditionell aufwändigen und zeitintensiven Ablauf erheblich vereinfacht und beschleunigt.

### Bezugszeichenliste

- **100:** Feldgerät
- **101:** Geräte-Privatschlüssel
- **102:** Geräte-Öffentlicher Schlüssel
- **105:** Anwender
- **110:** Kalibrierantrag
- **111:** Seriennummer
- **112:** Geräte-ID UUID)
- **115:** Signierter Kalibrierantrag vom Feldgerät signiert)
- **120:** Digitales Messprotokoll
- **125:** Signiertes Messprotokoll vom Feldgerät signiert)
- **200:** Benutzeroberfläche / App
- **300:** Shop-Backend-System des Herstellers
- **301:** Shop-Privatschlüssel
- **302:** Shop-Öffentlicher Schlüssel
- **303:** Datenbank im Shop-Backend)
- **310:** Bestellung
- **315:** Digitale Kalibriererlaubnis / Signierter Kalibrierantrag vom Shop-Backend signiert)
- **400:** Kalibrierlabor des Herstellers
- **401:** Labor-Privatschlüssel
- **410:** Lager / Versand
- **420:** Digitales Kalibrierzertifikat
- **500:** Kalibriernormal
- **S1:** Schritt: Kalibrierung anfordern
- **S2:** Schritt: Kalibrierantrag erzeugen
- **S3:** Schritt: Kalibrierantrag signieren
- **S4:** Schritt: Signierten Kalibrierantrag auslesen
- **S5:** Schritt: Bestellung & signierten Kalibrierantrag übermitteln
- **S6:** Schritt: Legitimität prüfen
- **S7:** Schritt: Bezahlung prüfen
- **S8:** Schritt: Kalibrierantrag signieren Shop)
- **S9:** Schritt: Kalibriernormale anfordern
- **S10:** Schritt: Kalibriernormale versenden physisch)
- **S11:** Schritt: Digitale Kalibriererlaubnis schreiben
- **S12:** Schritt: Signatur prüfen & Kalibrierung freischalten
- **S13:** Schritt: Kalibrierung starten
- **S14:** Schritt: Gerätezustand prüfen
- **S15:** Schritt: Messung durchführen
- **S16:** Schritt: Messwerte verpacken
- **S17:** Schritt: Messprotokoll signieren
- **S18:** Schritt: Kalibrierungsergebnisse auslesen
- **S19:** Schritt: Messprotokoll übermitteln / weiterleiten
- **S20:** Schritt: Kalibriernormale zurücksenden physisch)
- **S21:** Schritt: Messprotokoll bewerten & signieren
- **S22:** Schritt: Digitales Kalibrierzertifikat übermitteln / weiterleiten
- **S23:** Schritt: Digitales Kalibrierzertifikat speichern
- **Z1:** Zustand: "Bereit für Kalibration"
- **Z2:** Zustand: "kalibriert"
- **K2:** Physischer Versandweg

## Patentansprüche

1. Verfahren zur Kalibrierung und/oder Adjustierung von Sensoren der Prozesstechnik, umfassend die Schritte:
▪ Bestellung einer Kalibrierung durch den Anwender 105) unter Angabe der Seriennummer 111) des Sensors 100) beim Shop-Backend-System des Herstellers 300);
▪ Übermittlung einer digitalen Kalibriererlaubnis 315) und - sofern sich diese nicht im Kundenbesitz befindet oder integraler Bestandteil des Sensors 100) ist - einer Kalibriernormale 500) vom Lager- und Versandsystem des Herstellers 410) an den Anwender 105);
▪ Durchführung und Dokumentation der Messungen mittels der Kalibriernormale 500) durch den Anwender 105);
▪ Übertragung der während der Kalibrierung ermittelten Messwerte 121) an das Shop-Backend-System des Herstellers 300);
▪ Prüfung der Daten durch das Shop-Backend-System des Herstellers 300) und Ausstellung eines Kalibrierzertifikats 420), das digital im Sensor 100) abgespeichert wird;
▪ Kryptographische Verkettung der Kalibrierzertifikate 420).

2. Verfahren nach Anspruch 1,
**dadurch gekennzeichnet, dass** der Schritt der Bestellung einer Kalibrierung umfasst:
▪ Erzeugen eines Kalibrierantrags 110) durch das Feldgerät 100), welcher die Seriennummer 111) und eine eindeutige Geräte-ID UUID) 112) des Geräts 100) enthält S2);
▪ Signieren des Kalibrierantrags 110) durch das Feldgerät 100) mittels eines Geräte-Privatschlüssels 101) S3), um einen signierten Kalibrierantrag 115) zu erzeugen;
▪ Auslesen des signierten Kalibrierantrags 115) vom Gerät 100) S4) und Übermittlung zusammen mit einer Bestellung 310) an das Shop-Backend-System des Herstellers 300).

3. Verfahren nach Anspruch 2,
**dadurch gekennzeichnet, dass** der Schritt der Übermittlung einer digitalen Kalibriererlaubnis umfasst:
▪ Prüfen der Legitimität des signierten Kalibrierantrags 115) durch das Shop-Backend-System des Herstellers 300) mittels eines Geräte-Öffentlichen Schlüssels 102) des Geräts 100) S6);
▪ Signieren des Kalibrierantrags 110) durch das Shop-Backend-System des Herstellers 300) mittels eines Shop-Privatschlüssels 301) S8), um einen signierten Kalibrierantrag 315) zu erzeugen;
▪ Übermittlung des vom Shop-Backend-System des Herstellers 300) signierten Kalibrierantrags 315) an das Feldgerät 100) S11);
▪ Prüfen der Signatur des vom Shop-Backend-System des Herstellers 300) signierten Kalibrierantrags 315) durch das Feldgerät 100) mittels eines im Feldgerät 100) hinterlegten Shop-Öffentlichen Schlüssels 302) S12).

4. Verfahren nach einem der Ansprüche 1 bis 3,
**dadurch gekennzeichnet, dass** der Schritt der Durchführung und Dokumentation der Messungen umfasst:
▪ Prüfen des Gerätezustands Z1) durch das Feldgerät 100) auf Eignung für die Kalibrierung S14);
▪ Verpacken der ermittelten Messwerte 121) in ein digitales Messprotokoll 120) S16);
▪ Signieren des digitalen Messprotokolls 120) durch das Feldgerät 100) mittels des Geräte-Privatschlüssels 101) S17), um ein signiertes Messprotokoll 125) zu erzeugen.

5. Verfahren nach Anspruch 4,
**dadurch gekennzeichnet, dass** der Schritt der Prüfung der Daten und Ausstellung eines Kalibrierzertifikats umfasst:
▪ Übermittlung des vom Feldgerät 100) signierten digitalen Messprotokolls 125) an ein Kalibrierlabor des Herstellers 400) S19);
▪ Bewertung des digitalen Messprotokolls 125) durch das Kalibrierlabor des Herstellers 400);
▪ Signieren des digitalen Messprotokolls 125) durch das Kalibrierlabor des Herstellers 400) mittels eines Labor-Privatschlüssels 401) S21), wodurch ein digitales Kalibrierzertifikat 420) entsteht;
▪ Übermittlung des signierten digitalen Kalibrierzertifikats 420) an das Feldgerät 100) S22), wo es gespeichert wird S23).

6. Verfahren nach Anspruch 5,
**dadurch gekennzeichnet, dass** das Feldgerät 100) nach Erhalt des signierten digitalen Kalibrierzertifikats 420) in einen "kalibrierten" Zustand Z2) übergeht.

7. Verfahren nach einem der Ansprüche 1 bis 6,
**dadurch gekennzeichnet, dass** die Durchführung der Messungen durch den Anwender 105) durch eine App oder eine Anleitung auf einer Webseite unterstützt wird.

8. Verfahren nach einem der Ansprüche 1 bis 7,
**dadurch gekennzeichnet, dass** die Übertragung der digitalen Kalibriererlaubnis 315) und der Kalibrierzertifikate 420) mittels einer beliebigen digitalen Kommunikation erfolgt, insbesondere durch Scannen eines auf dem Display angezeigten QR-Codes.

9. Verfahren nach einem der Ansprüche 1 bis 8,
**dadurch gekennzeichnet, dass** während der Kalibrierung neben den ermittelten Messwerten 121) auch lokale Umgebungsdaten vom Ort der Kalibrierung an das Shop-Backend-System des Herstellers 300) übermittelt werden.

10. Verfahren nach einem der Ansprüche 1 bis 9,
**dadurch gekennzeichnet, dass** Adjustierungsdaten 421) zusammen mit dem Kalibrierzertifikat 420) in den Sensor 100) geladen werden.

11. Verfahren nach einem der Ansprüche 1 bis 10,
**dadurch gekennzeichnet, dass** das Kalibrierzertifikat 420) sowohl als physische Kopie 425) als auch digital verfügbar ist.

12. Verfahren nach einem der Ansprüche 1 bis 11,
**dadurch gekennzeichnet, dass** die kryptographische Verkettung der Kalibrierzertifikate 420) eine lückenlose Nachweisführung bei Audits ermöglicht.
